# FASCICULE DE BREVET EUROPEEN

(11) **EP 2 563 874 B1**
(45) Date de publication et mention de la délivrance du brevet: **08.01.2014**
(21) Numéro de dépôt: 11720588.0
(22) Date de dépôt: 15.04.2011
(51) Int. Cl.: C09K 8/58, E21B 47/10

(54) **UTILISATION D'ACIDES BENZOÏQUES HALOGENES POUR LE MARQUAGE D'EAU D'INJECTION**
VERWENDUNG VON HALOGENIERTEN BENZOESÄUREN ZUR MARKIERUNG VON INJEKTIONSWASSER
USE OF HALOGENATED BENZOIC ACIDS FOR LABELLING INJECTION WATER

(30) Priorité: 27.04.2010 FR 1053202
(43) Date de publication de la demande: 06.03.2013
(73) Titulaire: Total S.A., 92400 Courbevoie (FR)
(72) Inventeur: PREUDHOMME, Hugues, F-64140 Lons (FR); SERRES PIOLE, Coralie, F-64000 Pau (FR); COMMARIEU, Annie, F-64000 Pau (FR); AUBERTIN, Fabrice, F-64420 Limendous (FR)
(74) Mandataire: Hirsch & Associés
(86) Numéro de dépôt international: PCT/IB2011/051637
(87) Numéro de publication internationale: WO 2011/135481

(56) Documents cités:
- US-A- 5 246 860
- US-A1- 2006 144 588
- C. U. GALDIGA, T. GREIBROKK: "Ultra-trace determination of fluorinated aromatic carboxylic acids in aqueous reservoir fluids using solid-phase extraction", JOURNAL OF CHROMATOGRAPHY A, vol. 793, no. 2, 16 janvier 1998 (1998-01-16), pages 297-306, XP002613558, DOI: doi:10.1016/S0021-9673(97)00927-8

## Description

### DOMAINE DE L'INVENTION

La présente invention concerne l'utilisation de dérivés halogénés de l'acide benzoïque pour le marquage d'eau d'injection dans l'exploitation d'hydrocarbures.

### ARRIERE-PLAN TECHNIQUE

Dans le cadre de l'exploitation d'hydrocarbures contenus dans une formation souterraine, on récupère souvent moins de la moitié des hydrocarbures présents par des moyens primaires, c'est-à-dire en utilisant la pression naturelle du gaz ou des liquides présents dans la formation souterraine. Pour compléter la récupération primaire, on peut procéder à une récupération secondaire consistant à mettre en oeuvre une production par injection d'eau, éventuellement additionnée de molécules synthétiques ou naturelles (polymères, alcalins, composés tensioactifs...).

Afin d'optimiser la récupération des hydrocarbures, on peut réaliser des campagnes de traçage du réservoir. Des traceurs sont ajoutés au fluide injecté (eau ou gaz). Le fluide se déplace dans le réservoir. Les traceurs sont produits avec le fluide produit (eau, gaz). La mesure du temps séparant l'injection d'un composé traceur de son arrivée au point de production permet de déterminer, entre autres, le volume balayé du réservoir. Cela est important pour évaluer les débits de production qui peuvent être attendus et pour déterminer la quantité d'eau et/ou d'additifs chimiques à introduire dans la formation souterraine.

L'injection d'une pluralité de composés traceurs permet d'effectuer des analyses simultanées (par exemple lorsqu'on utilise plusieurs puits d'injection) ou des essais de traçage successifs dans le temps. L'évolution de la quantité des différents composés traceurs récupérés en fonction du temps ou du volume de fluide produit permet ainsi d'obtenir une cartographie complète des flux dans la formation souterraine, et par exemple de détecter des aberrations dans les débits dues à des différentiels de pression dans la formation souterraine, susceptibles de fausser les performances.

Les documents US 5,246,860, US 2006/144588 WO 02/095189 et WO 2006/047478 fournissent des exemples de procédés de marquage des fluides d'injection.

A l'heure actuelle, deux familles de composés chimiques traceurs sont utilisées en pratique, à savoir des acides naphtalènes sulfoniques et des dérivés fluorés de l'acide benzoïque.

Toutefois, la variété des composés disponibles est insuffisante pour permettre une analyse réellement poussée des caractéristiques d'un réservoir et de s'affranchir d'un éventuel effet mémoire lors de campagnes de traçages successives. Il existe donc un réel besoin de fournir de nouveaux composés de traçage permettant d'effectuer une analyse plus fine des caractéristiques d'une formation souterraine.

### RESUME DE L'INVENTION

L'invention concerne en premier lieu un procédé d'inspection d'une formation souterraine contenant des hydrocarbures, comprenant :
- l'injection d'au moins un composé de traçage dans la formation souterraine ;
- la récupération d'un fluide issu de la formation souterraine ;
- la détection dudit composé de traçage dans le fluide ;
dans lequel le composé de traçage est un composé de formule : 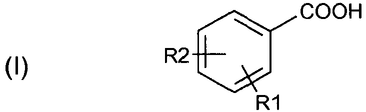 dans laquelle R1 et R2 représentent deux groupements différents l'un de l'autre, choisis parmi F, Cl, Br et CF₃.

Selon un mode de réalisation, le composé de traçage est choisi parmi l'acide 2-chloro-4-fluorobenzoïque, l'acide 2-chloro-6-fluorobenzoïque, l'acide 3-chloro-2-fluorobenzoïque, l'acide 3-chloro-4-fluorobenzoïque, l'acide 4-chloro-2-fluorobenzoïque, l'acide 5-chloro-2-fluorobenzoïque, l'acide 2-fluoro-3-(trifluorométhyl)benzoïque, l'acide 2-fluoro-4-(trifluorométhyl)benzoïque, l'acide 2-fluoro-5-(trifluorométhyl) benzoïque, l'acide 2-fluoro-6-(trifluorométhyl)benzoïque, l'acide 3-fluoro-4-(trifluorométhyl)benzoïque, l'acide 3-fluoro-5-(trifluorométhyl)benzoïque, l'acide 4-fluoro-2-(trifluorométhyl)benzoïque, l'acide 4-fluoro-3-(trifluorométhyl)benzoïque et l'acide 5-fluoro-2-(trifluorométhyl)benzoïque.

Selon un mode de réalisation, le procédé comprend l'injection d'une pluralité de composés de traçage différents dans la formation souterraine, la récupération d'un ou plusieurs fluides issus de la formation souterraine et la détection de chaque composé de traçage dans le fluide ou les fluides, les composés de traçage étant choisis parmi les composés de formule (I), et en outre éventuellement parmi d'autres composés, lesdits autres composés étant de préférence des composés dérivés de l'acide naphtalène sulfonique ou des composés fluorés dérivés de l'acide benzoïque.

Selon un mode de réalisation, le ou les composés de traçage sont injectés dans la formation souterraine par un ou plusieurs puits d'injection, sous la forme d'une ou plusieurs solutions aqueuses, et le ou les fluides issus de la formation souterraine comprennent de l'eau et des hydrocarbures et sont récupérés dans un ou plusieurs puits de production.

Selon un mode de réalisation, la détection du composé de traçage dans le ou les fluides comprend une analyse de chromatographie en phase gazeuse, éventuellement couplée à une analyse de spectrométrie de masse ou à une analyse de spectrométrie de masse en tandem, ou une analyse chromatographique en phase liquide, éventuellement couplée à une détection d'absorbance dans l'ultraviolet, à une détection par fluorescence et / ou à une analyse de spectrométrie de masse ou à une analyse de spectrométrie de masse en tandem.

Selon un mode de réalisation, la détection du composé de traçage dans le ou les fluides est effectuée par analyse chromatographique en phase liquide couplée à une analyse de spectrométrie de masse en tandem.

Selon un mode de réalisation, l'analyse chromatographique en phase liquide est effectuée avec une phase stationnaire composée de particules de taille moyenne inférieure ou égale à 2,1 µm.

Selon un mode de réalisation, la détection du composé de traçage dans le fluide ou les fluides comprend :
- le prélèvement d'un échantillon de fluide ;
- éventuellement le traitement de l'échantillon de fluide par extraction en phase solide ;
- la filtration de l'échantillon ;
- la détermination de la présence ou de l'absence du ou des composés de traçage dans l'échantillon et éventuellement la mesure de la quantité du ou des composés de traçage présents dans l'échantillon.

Selon un mode de réalisation, l'extraction en phase solide est effectuée sur un support présentant des fonctions hydrophiles et hydrophobes, et de préférence sur un support de copolymère de poly(divinylbenzène-co-N-vinylpyrrolidone) macroporeux.

Selon un mode de réalisation, l'extraction en phase solide est effectuée par traitement du support au moyen d'au moins une solution de traitement, par chargement de l'échantillon, par lavage du support au moyen d'au moins une solution de lavage et par élution au moyen d'au moins une solution d'élution, les solutions de traitement, de lavage et d'élution étant de préférence des mélanges d'acétonitrile et d'eau.

L'invention concerne également l'utilisation d'au moins un composé de formule : 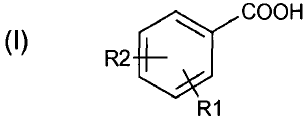 dans laquelle R1 et R2 représentent deux groupements différents l'un de l'autre, choisis parmi F, Cl, Br et CF₃, en tant que composé de traçage dans une solution aqueuse injectée dans une formation souterraine contenant des hydrocarbures, pour l'étude de ladite formation souterraine par diffusion du composé de traçage au travers de celle-ci, et notamment pour le contrôle des flux entre un puits d'injection et un puits de production et / ou pour l'évaluation de volumes d'hydrocarbures en réserve dans la formation souterraine.

Selon un mode de réalisation de cette utilisation, le composé de formule (I) est choisi parmi l'acide 2-chloro-4-fluorobenzoïque, l'acide 2-chloro-6-fluorobenzoïque, l'acide 3-chloro-2-fluorobenzoïque, l'acide 3-chloro-4-fluorobenzoïque, l'acide 4-chloro-2-fluorobenzoïque, l'acide 5-chloro-2-fluorobenzoïque, l'acide 2-fluoro-3-(trifluorométhyl)benzoïque, l'acide 2-fluoro-4-(trifluorométhyl)benzoïque, l'acide 2-fluoro-5-(trifluorométhyl) benzoïque, l'acide 2-fluoro-6-(trifluorométhyl)benzoïque, l'acide 3-fluoro-4-(trifluorométhyl)benzoïque, l'acide 3-fluoro-5-(trifluorométhyl)benzoïque, l'acide 4-fluoro-2-(trifluorométhyl)benzoïque, l'acide 4-fluoro-3-(trifluorométhyl)benzoïque et l'acide 5-fluoro-2-(trifluorométhyl)benzoïque.

La présente invention permet de surmonter les inconvénients de l'état de la technique. Elle fournit plus particulièrement de nouveaux composés de traçage adaptés à être injectés dans une formation souterraine et détectés dans un ou des fluides de production.

Selon certains modes de réalisation particuliers, l'invention présente également une ou de préférence plusieurs des caractéristiques avantageuses énumérées ci-dessous.
- Les composés de traçage utilisés dans le cadre de l'invention sont compatibles avec les fluides naturellement présents dans le gisement, avec la roche pétrolifère elle-même, ainsi qu'avec les fluides injectés.
- La détection qualitative et quantitative des composés de traçage est particulièrement aisée. Elle peut être effectuée en utilisant l'ensemble des techniques classiques actuellement utilisées pour la détection des dérivés fluorés de l'acide benzoïque, ou bien encore, de manière particulièrement rapide et efficace, en utilisant une analyse par chromatographie en phase liquide à ultra-haute performance couplée à une analyse par spectrométrie de masse en tandem. Cette dernière méthode permet également de se dispenser des étapes de dérivation nécessaires pour la chromatographie en phase gazeuse, qui sont longues et entraînent des pertes de certains composés de traçage (notamment l'acide 3,5-bis(trifluorométhyl)benzoïque).

- Les composés de traçage sont inertes et stables dans le milieu traversé. Ils sont également résistants à la dégradation bactérienne, aux hautes températures et hautes pressions.
- In est possible de mettre en oeuvre le procédé selon l'invention sans aucune préparation préalable des échantillons, hormis une filtration.
- Il est également possible de préparer les échantillons de fluide de production, préalablement à l'analyse, de manière particulièrement rapide et efficace, en effectuant une extraction sur phase solide en une seule étape.

### DESCRIPTION DE MODES DE REALISATION DE L'INVENTION

L'invention est maintenant décrite plus en détail et de façon non limitative dans la description qui suit.

### Composés de traçage

Les composés de traçage utilisés dans le cadre de l'invention sont des dérivés halogénés de l'acide benzoïque. Ces composés répondent à la formule générale (I) suivante : 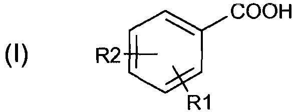 dans laquelle R1 et R2 représentent deux substituants différents l'un de l'autre, choisis parmi F, CI, Br et CF₃.

De préférence, R1 = F et R2 = CF₃, ou bien R1 = F et R2 = CI.

Les composés préférés sont les suivants :

| | | |
|---|---|---|
| (II) | 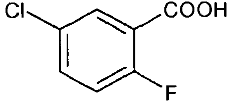 | acide 5-chloro-2-fluorobenzoïque ; |
| (III) | 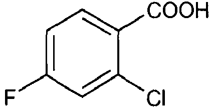 | acide 2-chloro-4-fluorobenzoïque ; |
| | 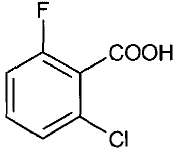 | |
| (IV) | | acide 2-chloro-6-fluorobenzoïque ; |
| (V) | 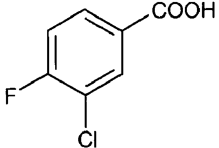 | acide 3-chloro-4-fluorobenzoïque ; |
| (VI) | 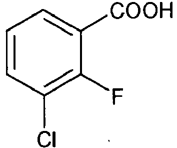 | acide 3-chloro-2-fluorobenzoïque ; |
| (VII) | 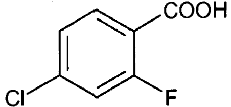 | acide 4-chloro-2-fluorobenzoïque ; |
| (VIII) | 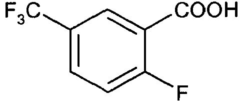 | acide 2-fluoro-5-(trifluorométhyl) benzoïque ; |
| (IX) | 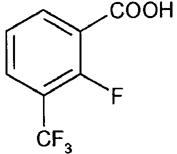 | acide 2-fluoro-3-(trifluorométhyl)benzoïque ; |
| (X) | 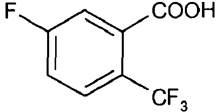 | acide 5-fluoro-2-(trifluorométhyl)benzoïque ; |
| (XI) | 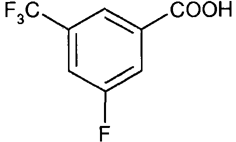 | acide 3-fluoro-5-(trifluorométhyl)benzoïque ; |
| (XII) | 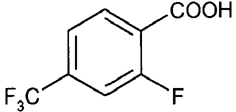 | acide 2-fluoro-4-(trifluorométhyl)benzoïque ; |
| | 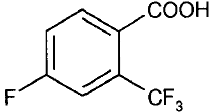 | |
| (XIII) | | acide 4-fluoro-2-(trifluorométhyl)benzoïque ; |
| (XIV) | 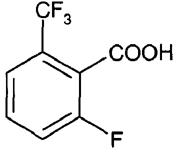 | acide 2-fluoro-6-(trifluorométhyl)benzoïque ; |
| (XV) | 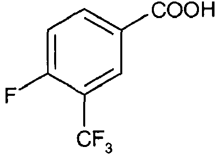 | acide 4-fluoro-3-(trifluorométhyl)benzoïque ; |
| (XVI) | 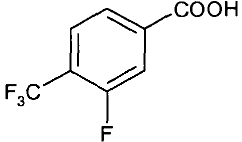 | acide 3-fluoro-4-(trifluorométhyl)benzoïque. |

Ces composés sont utilisés tels quels ou sous forme de sels, tels que les sels de sodium ou de potassium.

L'ensemble de ces composés sont disponibles dans le commerce, entre autres par l'intermédiaire de fournisseurs tels que Thermo Fisher, Sigma aldrich, Apollo Scientific ...

### Utilisation des composés de traçage

L'invention propose l'utilisation de composés de traçage pour caractériser (ou inspecter, étudier, analyser, surveiller) une formation souterraine contenant des hydrocarbures, en vue d'optimiser la production d'hydrocarbures grâce à une meilleure compréhension de la structure de la formation et de l'écoulement des fluides dans le réservoir.

Au moins un composé de traçage est injecté dans la formation souterraine. De préférence, plusieurs composés de traçage sont injectés dans la formation souterraine dans divers puits injecteurs, afin d'effectuer une caractérisation plus complète. Dans ce cas, les composés de traçage peuvent être des composés différents choisis parmi les composés décrits ci-dessus. Ils peuvent également comprendre d'une part des composés décrits ci-dessus, et d'autre part, d'autres composés, en particulier des composés dérivés de l'acide naphtalène sulfonique ou des composés fluorés dérivés de l'acide benzoïque. Des exemples de tels autres composés sont :
- l'acide 2-fluorobenzoïque ;
- l'acide 3-fluorobenzoïque ;
- l'acide 4-fluorobenzoïque ;
- l'acide 2,3-difluorobenzoïque ;
- l'acide 2,4-difluorobenzoïque ;
- l'acide 2,5-difluorobenzoïque ;
- l'acide 2,6-difluorobenzoïque ;
- l'acide 3,4-difluorobenzoïque ;
- l'acide 3,5-difluorobenzoïque ;
- l'acide 2,3,4-trifluorobenzoïque ;
- l'acide 2,3,6-trifluorobenzoïque ;
- l'acide 2,4,5-trifluorobenzoïque ;
- l'acide 2,4,6-trifluorobenzoïque ;
- l'acide 3,4,5-trifluorobenzoïque ;
- l'acide 2-trifluorométhylbenzoïque ;
- l'acide 3-trifluorométhylbenzoïque ;
- l'acide 4-trifluorométhylbenzoïque ;
- l'acide 3,5-bis(trifluorométhyl)benzoïque ; et
- l'acide 2,3,4,5-tétrafluorobenzoïque.

De préférence, le ou les composés de traçage sont injectés, tels quels ou sous forme de sels, en solution aqueuse dans un ou des puits d'injection. Lorsque de l'eau (incorporant éventuellement des additifs, tels que des composés tensioactifs) est injectée dans la formation souterraine pour améliorer la récupération des hydrocarbures, le ou les composés de traçage peuvent être simplement dissous dans l'eau d'injection sur site, ou peuvent être apportés à l'eau d'injection sous forme de solution concentrée qui est diluée dans l'eau d'injection sur site.

De préférence, les composés de traçage sont présents dans les solutions aqueuses à des concentrations inférieures ou égales à 20 % en masse.

Un ou plusieurs fluides issus de la formation souterraine et susceptibles de contenir les composés de traçage sont récupérés. Généralement, ces fluides sont des fluides de production, récupérés dans un ou plusieurs puits de production. Ces fluides peuvent être des mélanges liquide / gaz, et peuvent contenir éventuellement plusieurs phases et des particules solides. Ils peuvent contenir notamment de l'eau et des hydrocarbures. Un ou des échantillons sont prélevés dans le ou les fluides. Ces échantillons sont éventuellement débarrassés de leur fraction gazeuse et / ou de leur fraction solide, et éventuellement débarrassés d'une fraction huileuse (pour ne garder qu'une fraction essentiellement aqueuse). Puis on procède à une détection du ou des composés de traçage dans les échantillons, afin de déterminer si les composés de traçage sont présents dans les échantillons, et le cas échéant afin d'identifier les composés de traçage présents et de déterminer leur concentration.

La détection des composés de traçage peut s'effectuer notamment par analyse de chromatographie en phase gazeuse, éventuellement couplée à une analyse de spectrométrie de masse ou à une analyse de spectrométrie de masse en tandem, ou par analyse de chromatographie en phase liquide, éventuellement couplée à une détection d'absorbance dans l'ultraviolet, à une détection par fluorescence et / ou à une analyse de spectrométrie de masse ou à une analyse de spectrométrie de masse en tandem.

### Procédé de détection des composés de traçage

L'invention propose en outre un procédé de détection des composés de traçage reposant sur une analyse de chromatographie en phase liquide suivie d'une analyse de spectrométrie de masse en tandem. La spectrométrie de masse permet de caractériser / distinguer les composés une fois ionisés selon leur rapport masse sur charge (m/z) directement lié à la formule brute, et la chromatographie permet de différencier les composés isomères.

La chromatographie en phase liquide est préférable à la chromatographie en phase gazeuse (qui est la plus utilisée actuellement) car la chromatographie en phase gazeuse nécessite une étape préparatoire de dérivation chimique des composés de traçage qui consiste à modifier chimiquement le composé cible afin de lui donner des caractéristiques physico-chimiques compatibles avec la chromatographie en phase gazeuse, en particulier, en devenant volatil ou semi volatil, non thermolabile, peu ou pas dissocié en milieu aqueux, ayant une forte affinité pour des solvants peu polaires ... La chromatographie en phase liquide permet, quant à elle, de se dispenser de cette étape.

Il est particulièrement utile de pratiquer une chromatographie en phase liquide ultra haute performance (dite « UPLC »), c'est-à-dire une chromatographie en phase liquide utilisant une phase stationnaire constituée de particules de petite taille et fonctionnant à pression élevée (typiquement jusqu'à 100 MPa en comparaison des 15 MPa-20 MPa usuels en HPLC).

La taille moyenne des particules de la phase stationnaire est de préférence inférieure ou égale à 2,1 µm (contre typiquement 5 µm environ pour une chromatographie en phase liquide de type classique). La taille moyenne des particules est définie dans la présente demande comme étant le Dv50 des particules, c'est-à-dire le 50^{ème} centile de la distribution de taille des particules. Autrement dit, 50 % des particules ont une taille inférieure ou égale au Dv50 et 50 % ont une taille supérieure ou égale au Dv50. Le Dv50 est caractéristique du profil granulométrique (distribution volumétrique) de la phase stationnaire et il peut être déterminé par granulométrie laser.

En particulier, les colonnes de chromatographie UPLC disponibles dans le commerce comportent des phases stationnaires avec une taille moyenne (nominale) de particules de 1,7 µm, 1,8 pm, 1,9 µm et 2,1 µm.

A titre d'exemple, la colonne de type Acquity UPLC BEH C₁₈ (1,7 µm×2,1 mm×50 mm) commercialisée par Waters, dont la phase stationnaire est constituée de billes de silice dont le polymère présente une réticulation supérieure via des ponts éthane, le rendant plus stable sous une forte pression, greffées avec des groupements C₁₈ avec des extrémités coiffées, est particulièrement appropriée. Elle permet notamment de disposer d'une gamme de pH étendue (2-12).

La chromatographie peut par exemple être effectuée au moyen d'un premier solvant comprenant de l'eau et de l'acide formique ou de l'acide acétique, et d'un deuxième solvant comprenant de l'acétonitrile ou du méthanol et de l'acide formique. Un tampon peut être éventuellement ajouté dans les deux phases.

La chromatographie UPLC couplée à la spectrométrie de masse en tandem (« UPLC/MS/MS ») permet d'identifier spécifiquement les composés de traçage de l'invention (ainsi que les autres composés de traçage mentionnés ci-dessus et notamment les dérivés fluorés de l'acide benzoïque), et de les détecter avec une faible limite de quantification (de l'ordre de quelques ng/g injecté).

### Procédé de préparation d'échantillon

L'analyse UPLC/MS/MS peut être effectuée directement, c'est-à-dire sur des échantillons ne subissant pas de traitement préliminaire, hormis une filtration. Cela permet d'effectuer une analyse rapide et d'utiliser un faible volume d'échantillon (typiquement 10 µL).

Alternativement, si l'on souhaite améliorer le rapport signal / bruit et abaisser la limite de quantification des composés de traçage, il est avantageux de procéder à un traitement préliminaire de purification de l'échantillon par extraction en phase solide. Ce traitement permet d'éliminer les sels et les composés organiques présents dans l'échantillon en plus du ou des composés de traçage.

L'utilisation d'un support d'extraction comportant des fonctions hydrophiles et hydrophobes est particulièrement avantageuse à cet égard. Un tel support permet en effet de réaliser une extraction en phase solide en une seule étape en jouant sur deux phénomènes de rétention basés sur les interactions du groupe acide et du noyau aromatique (électron II).

Un support de type copolymère de poly(divinylbenzène-co-N-vinylpyrrolidone) macroporeux donne des résultats particulièrement bons pour l'ensemble des composés de traçage dérivés de l'acide benzoïque. Il est préférable que le système d'extraction en phase solide se présente sous la forme d'un disque plutôt que d'une colonne, afin d'éviter les risques de colmatage par l'échantillon. Les disques Oasis® HLB de la société Waters sont particulièrement appropriés.

La préparation du support puis le lavage et l'élution sont par exemple effectués avec des mélanges d'acétonitrile et d'eau avec un pH croissant. Un protocole détaillé est fourni dans l'exemple 2 ci-dessous.

Il faut noter que le traitement préliminaire de l'échantillon décrit ici peut également être utile pour une détection au moyen d'une autre technique que l'UPLC/MS/MS (par exemple au moyen d'une chromatographie en phase liquide associée à une détection dans l'ultraviolet).

### EXEMPLES

Les exemples suivants illustrent l'invention sans la limiter.

### Exemple 1 - analyse sans préparation d'échantillon

On effectue des tests de détection de l'acide 2-fluoro-5-(trifluorométhyl)benzoïque (2F-5tFmBA), de l'acide 5-chloro-2-fluorobenzoïque (5Cl-2FBA) et également de l'acide 4-fluorobenzoïque (4FBA), de l'acide 2,4-difluorobenzoïque (24dFBA), de l'acide 3,4,5-trifluorobenzoïque (345tFBA), de l'acide 4-trifluorométhylbenzoïque (4tFmBA), de l'acide 2,3,4,5-tétrafluorobenzoïque (2345tétraFBA) et de l'acide 3,5-bis(trifluorométhyl)benzoïque (25bistFmBA) par chromatographie UPLC/MS/MS, sans préparation d'échantillon (à l'exception d'une filtration sur un filtre à 0,2 µm). Les composés sont dissous dans de l'eau issue d'un gisement d'hydrocarbures.

La chromatographie UPLC est effectuée sur une colonne de type Acquity UPLC BEH C₁₈ (1,7 µm×2,1 mm×50 mm) commercialisée par Waters. Le volume de solution injectée est de 10 µL. Le protocole d'élution est résumé dans le tableau 1 suivant.

**Tableau 1 - protocole d'élution pour la chromatographie UPLC**

| Temps | Débit (mL/min) | Solvant A (eau ultra-pure + 0,1 % d'acide formique) | Solvant B (acétonitrile + 0,1 % d'acide formique) |
|---|---|---|---|
| 0 min | 0,85 | 95 % | 5 % |
| 0,2 min | 0,85 | 90 % | 10 % |
| 1,8 min | 0,85 | 72 % | 28 % |
| 2,5 min | 0,85 | 20 % | 80 % |
| 3,2 min | 0,85 | 20 % | 80 % |
| 4,0 min | 0,85 | 95 % | 5 % |

Les paramètres généraux pour la spectrométrie de masse en tandem sont les suivants :
- source d'ionisation (électrospray assisté pneumatiquement et chauffée) : mode négatif ;
- tension de capillaire : 2,85 kV ;
- tension de cône : 22 V ;
- différence de potentiel extracteur : 2 V ;
- RF (radiofréquence hexapole de focalisation) : 0,4 V ;
- température du bloc source : 150°C ;
- température de désolvatation : 450°C ;
- débit du gaz (N₂) de cône (gaz rideau) : 30 L/h ;
- débit du gaz de désolvatation (N₂) : 1000 L/h ;
- débit du gaz de collision (Ar) : 0,1 mL/min ;

Les paramètres spécifiques aux différents composés de traçage testés sont les suivants :
- paramètres pour le 2F-5tFmBA : transition ion parent à m/z (rapport masse sur charge) 207, ion fils à m/z 163, temps de scrutation à 0,035 s, tension de cône à 19 V, énergie de collision à 12 eV ;
- paramètres pour le 5Cl-2FBA : transition ion parent à m/z 173, ion fils à m/z 129, temps de scrutation à 0,035 s, tension de cône à 20 V, énergie de collision à 10 eV ;
- paramètres pour le 4FBA : transition ion parent à m/z 138,9, ion fils à m/z 94,9, temps de scrutation à 0,035 s, tension de cône à 19 V, énergie de collision à 10 eV ;
- paramètres pour le 24dFBA : transition ion parent à m/z 156,9, ion fils à m/z 112,9, temps de scrutation à 0,035 s, tension de cône à 20 V, énergie de collision à 10 eV ;
- paramètres pour le 345tFBA : transition ion parent à m/z 175, ion fils à m/z 131, temps de scrutation à 0,035 s, tension de cône à 20 V, énergie de collision à 10 eV ;
- paramètres pour le 4tFmBA : transition ion parent à m/z 188,9, ion fils à m/z 144,9, temps de scrutation à 0,035 s, tension de cône à 21 V, énergie de collision à 13 eV;
- paramètres pour le 2345tétraFBA : transition ion parent à m/z 193, ion fils à m/z 149, temps de scrutation à 0,01 s, tension de cône à 24 V, énergie de collision à 12 eV ;
- paramètres pour le 35bistFmBA : transition ion parent à m/z 257, ion fils à m/z 213, temps de scrutation à 0,01 s, tension de cône à 26 V, énergie de collision à 14 eV.

Les échantillons contiennent les composés de traçage respectifs à une concentration de 10⁻⁸ g/g. La solution est constituée d'un volume d'eau de production issue du gisement pétrolier, dilué avec deux volumes d'eau ultra-pure.

L'ensemble de la procédure d'analyse ci-dessus peut être effectué en environ 30 minutes (au lieu de plus de 1 jour pour une analyse de chromatographie en phase gazeuse / spectrométrie de masse).

On vérifie que tous les composés de traçage ci-dessus sont correctement détectés. En outre, on calcule la limite de quantification LQ de chaque composé de traçage en utilisant la formule LQ=10×C/(SN) où C est la concentration du composé de traçage (10⁻⁸ g/g) et SN est le rapport signal / bruit.

Les résultats obtenus sont résumés dans le tableau 2 suivant :

**Tableau 2 - limites de quantification des composés de traçage**

| Composé | LQ (g/g) |
|---|---|
| 2F-5tFmBA | 1,0×10⁻⁹ |
| 5Cl-2FBA | 2×10⁻⁹ |
| 4FBA | 7,5×10⁻⁹ |
| 24dFBA | 9×10⁻⁹ |
| 345tFBA | 3,5×10⁻⁹ |
| 4tFmBA | 1,0×10⁻⁹ |
| 2345tétraFBA | 2,5×10⁻⁹ |
| 35bistFmBA | 1,5×10⁻¹⁰ |

### Exemple 2 - analyse avec préparation d'échantillon

Dans cet exemple, on reprend la méthodologie de l'exemple 1 mais en ajoutant un traitement préliminaire d'échantillon par extraction en phase solide.

Ce traitement préliminaire est effectué sur un échantillon d'eau d'un volume de 200 mL. Le pH est ajusté à 1,5 avec de l'acide orthophosphorique. L'extraction en phase solide est effectuée sur un disque Oasis® HLB de Waters. Le disque est traité avec 5 mL d'acétonitrile et 10 mL d'eau ultra-pure (pH 1,5). Puis l'échantillon est versé sur le disque (durée de 5 minutes).

Différentes fractions sont ensuite collectées :
- fraction 1, collectée après versement de 5 mL d'une solution de lavage contenant 10 % d'acétonitrile et 90 % d'eau ultra-pure (pH 4,8) ;
- fraction 2, collectée après versement de 5 mL d'une solution d'élution contenant 20 % d'acétonitrile et 80 % d'eau ultra-pure (pH 6,8) ;
- fraction 3, collectée après versement de 5 mL d'une solution d'élution contenant 35 % d'acétonitrile et 65 % d'eau ultra-pure (pH 10) ;
- fractions 4, 5 et 6, collectées après versement de trois fois 5 mL d'une solution d'élution contenant 80 % d'acétonitrile et 20 % d'eau ultra-pure (pH 10).

Pour une récupération optimale des composés de traçage, les fractions à conserver sont les fractions 3 à 6 (sauf si l'on utilise certains autres composés de traçage tels que l'acide 2,4,6-trifluorobenzoïque, l'acide 2,3,6-trifluorobenzoïque et l'acide 2,6-difluorobenzoïque, auquel cas il est approprié de récupérer les fractions 2 à 6).

Les fractions collectées 2 et 3 sont filtrées à 0,2 µm et injectées telles quelles pour analyse par UPLC/MS/MS.

Les fractions collectées 4, 5 et 6 sont filtrées à 0,2 µm et diluées dans deux volumes d'eau ultra-pure avant analyse par UPLC/MS/MS.

Un premier essai est effectué avec la même eau de production que dans l'exemple 1 et la même concentration de composé de traçage (10⁻⁸ g/g). Cela permet de comparer le rapport signal / bruit (SN) obtenu par rapport à une analyse sans traitement préliminaire d'échantillon. Les résultats sont reportés dans le tableau 3 ci-dessous :

**Tableau 3 - comparaison des rapports signal / bruit avec et sans préparation d'échantillon**

| Composé | SN sans prétraitement | SN avec prétraitement (fraction 3) | SN avec prétraitement (fraction 4) |
|---|---|---|---|
| 2F-5tFmBA | 170 | 4022 | 1220 |
| 5Cl-2FBA | 97 | 2155 | 1314 |
| 4FBA | 26 | 594 | 496 |
| 2345tétraFBA | 83 | 1538 | 351 |
| 35bistFmBA | 1254 | 19048 | 23622 |

Un deuxième essai est effectué avec une concentration de composé de traçage inférieure, à savoir 5×10⁻¹⁰ g/g. On constate que, sans traitement préliminaire d'échantillon, les composés de traçage 2F-5tFmBA, 5Cl-2FBA, 4FBA et 2345tétraFBA ne peuvent pas être quantifiés. Avec le traitement préliminaire, ils peuvent être quantifiés. Le 35bistFmBA, quant à lui, est quantifiable à cette concentration même sans préparation préliminaire.

### Exemple 3 - comparaison avec une détection GC/MS

Dans cet exemple, on reprend la méthodologie de l'exemple 1 (sans traitement préliminaire d'échantillon). L'eau utilisée provient d'un autre gisement que celle utilisée dans les exemples 1 et 2. Dans un premier temps, on compare les résultats obtenus grâce au procédé de l'invention avec ceux obtenus avec une analyse en GC/MS (échantillon de 350 mL, traitement préliminaire avec deux extractions en phase solide, une étape de dérivation).

De la même façon que dans l'exemple 1, on calcule la limite de quantification LQ de chaque composé de traçage en utilisant la formule LQ=10×C/(SN) où C est la concentration du composé de traçage (10⁻⁹ g/g en GC/MS et 5*10⁻⁹ g/g en UPLC/SMS/MS) et SN est le rapport signal / bruit.

Les résultats sont reportés dans le tableau 4 ci-dessous :

**Tableau 4 - comparaison du procédé selon l'invention avec un procédé GC/MS (pmol = 10⁻¹² mol)**

| | GC/MS | | UPLC/MS/MS | |
|---|---|---|---|---|
| Composé | LQ (g/g) | LQ en fonction de la quantité réelle injectée | LQ (g/g) | LQ en fonction de la quantité réelle injectée |
| 4FBA | 1,5×10⁻¹⁰ | 94 pmol | 5×10⁻⁹ | 1,6 pmol |
| 24dFBA | 8×10⁻¹⁰ | 443 pmol | 6×10⁻⁹ | 1,7 pmol |
| 345tFBA | 2,5×10⁻¹⁰ | 124 pmol | 2×10⁻⁹ | 0,5 pmol |
| 4tFmBA | 1,5×10⁻⁸ | 6908 pmol | 8×10⁻¹⁰ | 0,2 pmol |
| 2345tétraFBA | 1,5×10⁻⁹ | 677 pmol | 3×10⁻⁹ | 0,7 pmol |
| 35bistFmBA | non détecté | - | 2×10⁻¹⁰ | 0,03 pmol |

Dans un deuxième temps, on prélève un échantillon de fluide de production contenant du 4FBA et provenant d'une campagne de traçage réelle.

La concentration de l'échantillon est estimée à 4,9×10⁻⁹ g/g avec la technique de GC/MS et à 4,6×10⁻⁹ g/g avec la technique d'UPLC/MS/MS : les résultats sont donc concordants.

## Revendications

1. Procédé d'inspection d'une formation souterraine contenant des hydrocarbures, comprenant :
- l'injection d'au moins un composé de traçage dans la formation souterraine ;
- la récupération d'un fluide issu de la formation souterraine ;
- la détection dudit composé de traçage dans le fluide ;
dans lequel le composé de traçage est un composé de formule : 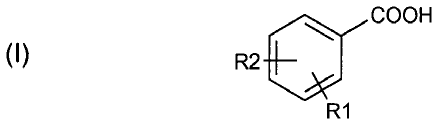 dans laquelle R1 et R2 représentent deux groupements différents l'un de l'autre, choisis parmi F, Cl, Br et CF₃.

2. Procédé selon la revendication 1, dans lequel le composé de traçage est choisi parmi l'acide 2-chloro-4-fluorobenzoïque, l'acide 2-chloro-6-fluorobenzoïque, l'acide 3-chloro-2-fluorobenzoïque, l'acide 3-chloro-4-fluorobenzoïque, l'acide 4-chloro-2-fluorobenzoïque, l'acide 5-chloro-2-fluorobenzoïque, l'acide 2-fluoro-3-(trifluorométhyl)benzoïque, l'acide 2-fluoro-4-(trifluorométhyl)benzoïque, l'acide 2-fluoro-5-(trifluorométhyl) benzoïque, l'acide 2-fluoro-6-(trifluorométhyl)benzoïque, l'acide 3-fluoro-4-(trifluorométhyl)benzoïque, l'acide 3-fluoro-5-(trifluorométhyl)benzoïque, l'acide 4-fluoro-2-(trifluorométhyl)benzoïque, l'acide 4-fluoro-3-(trifluorométhyl)benzoïque et l'acide 5-fluoro-2-(trifluorométhyl)benzoïque.

3. Procédé selon la revendication 1 ou 2, comprenant l'injection d'une pluralité de composés de traçage différents dans la formation souterraine, la récupération d'un ou plusieurs fluides issus de la formation souterraine et la détection de chaque composé de traçage dans le fluide ou les fluides, les composés de traçage étant choisis parmi les composés de formule (I), et en outre éventuellement parmi d'autres composés, lesdits autres composés étant de préférence des composés dérivés de l'acide naphtalène sulfonique ou des composés fluorés dérivés de l'acide benzoïque.

4. Procédé selon l'une des revendications 1 à 3, dans lequel le ou les composés de traçage sont injectés dans la formation souterraine par un ou plusieurs puits d'injection, sous la forme d'une ou plusieurs solutions aqueuses, et dans lequel le ou les fluides issus de la formation souterraine comprennent de l'eau et des hydrocarbures et sont récupérés dans un ou plusieurs puits de production.

5. Procédé selon l'une des revendications 1 à 4, dans lequel la détection du composé de traçage dans le ou les fluides comprend une analyse de chromatographie en phase gazeuse, éventuellement couplée à une analyse de spectrométrie de masse ou à une analyse de spectrométrie de masse en tandem, ou une analyse chromatographique en phase liquide, éventuellement couplée à une détection d'absorbance dans l'ultraviolet, à une détection par fluorescence et / ou à une analyse de spectrométrie de masse ou à une analyse de spectrométrie de masse en tandem.

6. Procédé selon l'une des revendications 1 à 4, dans lequel la détection du composé de traçage dans le ou les fluides est effectuée par analyse chromatographique en phase liquide couplée à une analyse de spectrométrie de masse en tandem.

7. Procédé selon la revendication 6, dans lequel l'analyse chromatographique en phase liquide est effectuée avec une phase stationnaire composée de particules de taille moyenne inférieure ou égale à 2,1 µm.

8. Procédé selon l'une des revendications 1 à 7, dans lequel la détection du composé de traçage dans le fluide ou les fluides comprend :
- le prélèvement d'un échantillon de fluide ;
- éventuellement le traitement de l'échantillon de fluide par extraction en phase solide ;
- la filtration de l'échantillon ;
- la détermination de la présence ou de l'absence du ou des composés de traçage dans l'échantillon et éventuellement la mesure de la quantité du ou des composés de traçage présents dans l'échantillon.

9. Procédé selon la revendication 8, dans lequel l'extraction en phase solide est effectuée sur un support présentant des fonctions hydrophiles et hydrophobes, et de préférence sur un support de copolymère de poly(divinylbenzène-co-N-vinylpyrrolidone) macroporeux.

10. Procédé selon la revendication 9, dans lequel l'extraction en phase solide est effectuée par traitement du support au moyen d'au moins une solution de traitement, par chargement de l'échantillon, par lavage du support au moyen d'au moins une solution de lavage et par élution au moyen d'au moins une solution d'élution, les solutions de traitement, de lavage et d'élution étant de préférence des mélanges d'acétonitrile et d'eau.

11. Utilisation d'au moins un composé de formule : 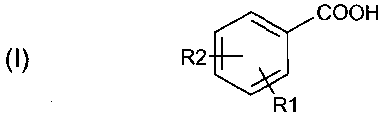 dans laquelle R1 et R2 représentent deux groupements différents l'un de l'autre, choisis parmi F, Cl, Br et CF₃, en tant que composé de traçage dans une solution aqueuse injectée dans une formation souterraine contenant des hydrocarbures, pour l'étude de ladite formation souterraine par diffusion du composé de traçage au travers de celle-ci, et notamment pour le contrôle des flux entre un puits d'injection et un puits de production et / ou pour l'évaluation de volumes d'hydrocarbures en réserve dans la formation souterraine.

12. Utilisation selon la revendication 11, dans laquelle le composé de formule (I) est choisi parmi l'acide 2-chloro-4-fluorobenzoïque, l'acide 2-chloro-6-fluorobenzoïque, l'acide 3-chloro-2-fluorobenzoïque, l'acide 3-chloro-4-fluorobenzoïque, l'acide 4-chloro-2-fluorobenzoïque, l'acide 5-chloro-2-fluorobenzoïque, l'acide 2-fluoro-3-(trifluorométhyl)benzoïque, l'acide 2-fluoro-4-(trifluorométhyl)benzoïque, l'acide 2-fluoro-5-(trifluorométhyl) benzoïque, l'acide 2-fluoro-6-(trifluorométhyl)benzoïque, l'acide 3-fluoro-4-(trifluorométhyl)benzoïque, l'acide 3-fluoro-5-(trifluorométhyl)benzoïque, l'acide 4-fluoro-2-(trifluorométhyl)benzoïque, l'acide 4-fluoro-3-(trifluorométhyl)benzoïque et l'acide 5-fluoro-2-(trifluorométhyl)benzoïque.

## Patentansprüche

1. Verfahren zur Erkundung einer unterirdischen Formation, die Kohlenwasserstoffe enthält, Folgendes umfassend:
- Einleiten mindestens einer Nachverfolgungsverbindung in die unterirdische Formation;
- Rückgewinnen eines Fluids, das aus der unterirdischen Formation stammt;
- Detektieren der Nachverfolgungsverbindung in dem Fluid;
wobei es sich bei der Nachverfolgungsverbindung um eine Verbindung der folgenden Formel handelt: 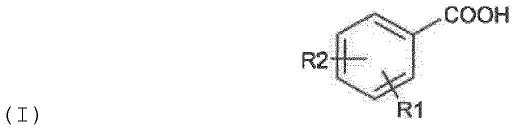 wobei R1 und R2 für zwei Gruppen stehen, die voneinander verschieden sind und aus F, Cl, Br und CF₃ ausgewählt sind.

2. Verfahren nach Anspruch 1, wobei die Nachverfolgungsverbindung aus 2-Chlor-4-fluorbenzoesäure, 2-Chlor-6-fluorbenzoesäure, 3-Chlor-2-fluorbenzoesäure, 3-Chlor-4-fluorbenzoesäure, 4-Chlor-2-fluorbenzoesäure, 5-Chlor-2-fluorbenzoesäure, 2-Fluor-3-(trifluormethyl)benzoesäure, 2-Fluor-4-(trifluormethyl)benzoesäure, 2-Fluor-5-(trifluormethyl)benzoesäure, 2-Fluor-6-(trifluormethyl)benzoesäure, 3-Fluor-4-(trifluormethyl)benzoesäure, 3-Fluor-5-(trifluormethyl)benzoesäure, 4-Fluor-2-(trifluormethyl)benzoesäure, 4-Fluor-3-(trifluormethyl)benzoesäure und 5-Fluor-2-(trifluormethyl)benzoesäure ausgewählt ist.

3. Verfahren nach Anspruch 1 oder 2, wobei es das Einleiten mehrerer verschiedenartiger Nachverfolgungsverbindungen in die unterirdische Formation, das Rückgewinnen eines oder mehrerer Fluids, das/die aus der unterirdischen Formation stammt/stammen, und das Detektieren jeder der Nachverfolgungsverbindungen in dem Fluid oder den Fluids umfasst, wobei die Nachverfolgungsverbindungen aus den Verbindungen der Formel (I) ausgewählt sind, und darüber hinaus möglicherweise aus weiteren Verbindungen ausgewählt sind, wobei es sich bei den weiteren Verbindungen vorzugsweise um Verbindungen handelt, die sich von Naphthalinsulfonsäure ableiten, oder um fluorierte Verbindungen, die sich von Benzoesäure ableiten.

4. Verfahren nach einem der Ansprüche 1 bis 3, wobei die Nachverfolgungsverbindung(en) mittels eines oder mehrerer Einleitungsschächte in Form einer oder mehrerer wässriger Lösungen in die unterirdische Formation eingeleitet wird/werden, und wobei das oder die Fluid(s), welche(s) aus der unterirdischen Formation umfasst/umfassen, Wasser und Kohlenwasserstoffe enthält/enthalten und in einem oder mehreren Förderschacht/Förderschächten zurückgewonnen wird/werden.

5. Verfahren nach einem der Ansprüche 1 bis 4, wobei die Detektion der Nachverfolgungsverbindung in dem oder den Fluid(s) eine gaschromatographische Untersuchung umfasst, welche möglicherweise mit einer massenspektrometrischen Untersuchung oder mit einer Tandemmassenspektrometrischen Untersuchung gekoppelt ist, oder eine flüssigchromatographische Untersuchung, welche möglicherweise mit einem UV-Absorptionsdetektor, mit einem Fluoreszenzdetektor und/oder mit einer massenspektrometrischen Untersuchung oder mit einer Tandem-massenspektrometrischen Untersuchung gekoppelt ist.

6. Verfahren nach einem der Ansprüche 1 bis 4, wobei die Detektion der Nachverfolgungsverbindung in dem oder den Fluid(s) mittels einer flüssigchromatographischen Untersuchung durchgeführt wird, welche mit einer Tandem-massenspektrometrischen Untersuchung gekoppelt ist.

7. Verfahren nach Anspruch 6, wobei die flüssigchromatographische Untersuchung mit einer stationären Phase durchgeführt wird, die sich aus Partikeln mit einer mittleren Größe von höchstens 2,1 µm zusammensetzt.

8. Verfahren nach einem der Ansprüche 1 bis 7, wobei die Detektion der Rückverfolgungsverbindung in dem Fluid oder den Fluids Folgendes umfasst:
- Ziehen einer Fluidprobe;
- Behandeln der Fluidprobe mittels Festphasenextraktion;
- Filtrieren der Probe;
- Bestimmen des Vorliegens oder der Abwesenheit der Nachverfolgungsverbindung(en) in der Probe, und möglicherweise Messen der Menge der Nachverfolgungsverbindung(en), die in der Probe vorliegt/vorliegen.

9. Verfahren nach Anspruch 8, wobei die Festphasenextraktion auf einem Träger durchgeführt wird, der hydrophile und hydrophobe funktionelle Gruppen aufweist, und vorzugsweise auf einem Träger aus dem großporigem Copolymer von Poly(divinylbenzol-co-Nvinylpyrrolidon).

10. Verfahren nach Anspruch 9, wobei die Festphasenextraktion durchgeführt wird, indem der Träger mittels mindestens einer Behandlungslösung behandelt wird, indem eine Beladung mit der Probe erfolgt, indem der Träger mittels mindestens einer Waschlösung gewaschen wird, und indem eine Elution mittels mindestens einer Elutionslösung erfolgt, wobei es sich bei den Behandungs-, Wasch- und Elutionslösungen vorzugsweise um Mischungen aus Acetonitril und Wasser handelt.

11. Verwendung mindestens einer Verbindung der folgenden Formel: 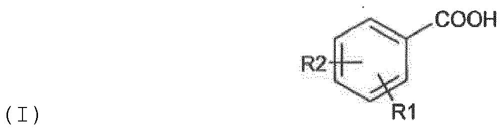 wobei R1 und R2 für zwei Gruppen stehen, die voneinander verschieden sind und aus F, Cl, Br und CF₃ ausgewählt sind, als Nachverfolgungsverbindung in einer wässrigen Lösung, die in eine unterirdische Formation eingeleitet wird, welche Kohlenwasserstoffe enthält, um die unterirdische Formation dadurch zu untersuchen, dass sich die Nachverfolgungsverbindung darin verteilt, und insbesondere um die Strömungsverhältnisse zwischen einem Einleitungsschacht und einem Förderschacht zu prüfen und/oder die Volumina an Kohlenwasserstoffen zu bewerten, welche in der unterirdischen Formation lagern.

12. Verwendung nach Anspruch 11, wobei die Verbindung nach Formel (I) aus 2-Chlor-4-fluorbenzoesäure, 2-Chlor-6-fluorbenzoesäure, 3-Chlor-2-fluorbenzoesäure, 3-Chlor-4-fluorbenzoesäure, 4-Chlor-2-fluorbenzoesäure, 5-Chlor-2-fluorbenzoesäure, 2-Fluor-3-(trifluormethyl)benzoesäure, 2-Fluor-4-(trifluormethyl)benzoesäure, 2-Fluor-5-(trifluormethyl)benzoesäure, 2-Fluor-6-(trifluormethyl)benzoesäure, 3-Fluor-4-(trifluormethyl)benzoesäure, 3-Fluor-5-(trifluormethyl)benzoesäure, 4-Fluor-2-(trifluormethyl)benzoesäure, 4-Fluor-3-(trifluormethyl)benzoesäure und 5-Fluor-2-(trifluormethyl)benzoesäure ausgewählt ist.

## Claims

1. Method for the inspection of an underground formation containing hydrocarbons, comprising:
- injecting at least one tracing compound into the underground formation;
- recovering a fluid originating from the underground formation;
- detecting said tracing compound in the fluid;
in which the tracing compound is a compound of formula: 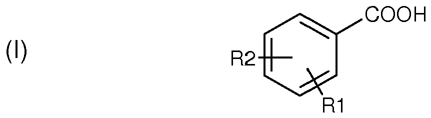 in which R1 and R2 represent two groups different from each other, chosen from F, Cl, Br and CF₃.

2. Method according to claim 1, in which the tracing compound is chosen from 2-chloro-4-fluorobenzoic acid, 2-chloro-6-fluorobenzoic acid, 3-chloro-2-fluorobenzoic acid, 3-chloro-4-fluorobenzoic acid, 4-chloro-2-fluorobenzoic acid, 5-chloro-2-fluorobenzoic acid, 2-fluoro-3-(trifluoromethyl)benzoic acid, 2-fluoro4-(trifluoromethyl)benzoic acid, 2-fluoro-5-(trifluoromethyl) benzoic acid, 2fluoro-6-(trifluoromethyl)benzoic acid, 3-fluoro-4-(trifluoromethyl)benzoic acid, 3fluoro-5-(trifluoromethyl)benzoic acid, 4-fluoro-2-(trifluoromethyl)benzoic acid, 4-fluoro-3-(trifluoromethyl)benzoic acid and 5-fluoro-2-(trifluoromethyl)benzoic acid.

3. Method according to claim 1 or 2 comprising the injection of a plurality of different tracing compounds into the underground formation, recovering one or more fluids originating from the underground formation and detecting each tracing compound in the fluid(s), the tracing compounds being chosen from the compounds of formula (I), and moreover optionally from other compounds, said other compounds being preferably compounds derived from naphthalenesulphonic acid or fluorinated compounds derived from benzoic acid.

4. Method according to one of claims 1 to 3, in which the tracing compound(s) are injected into the underground formation via one or more injection wells, in the form of one or more aqueous solutions, and in which the fluid(s) originating from the underground formation comprise water and hydrocarbons and are recovered from one or more production well(s).

5. Method according to one of claims 1 to 4, in which the detection of the tracing compound in the fluid(s) comprises gas chromatography analysis, optionally coupled with mass spectrometry analysis or tandem mass spectrometry analysis, or liquid chromatography analysis, optionally coupled with ultraviolet absorption detection, fluorescence detection and/or mass spectrometry analysis or tandem mass spectrometry analysis.

6. Method according to one of claims 1 to 4, in which the detection of the tracing compound in the fluid(s) is carried out by liquid chromatography analysis coupled with tandem mass spectrometry analysis.

7. Method according to claim 6, in which the liquid chromatography analysis is carried out with a stationary phase composed of particles having an average size less than or equal to 2.1 µm.

8. Method according to one of claims 1 to 7, in which the detection of the tracing compound in the fluid(s) comprises:
- taking a sample of fluid;
- optionally, treating the sample of fluid by solid phase extraction;
- filtering the sample:
- determining the presence or absence of the tracing compound(s) in the sample and optionally measuring the quantity of the tracing compound(s) present in the sample.

9. Method according to claim 8, in which the solid phase extraction is carried out on a support having hydrophilic and hydrophobic functions, preferably on a support of macroporous poly(divinylbenzene-co-N-vinylpyrrolidone) copolymer.

10. Method according to claim 9, in which the solid phase extraction is carried out by treating the support with at least one treatment solution, loading the sample, washing the support with at least one washing solution and eluting with at least one elution solution, the treatment, washing and elution solutions being preferably mixtures of acetonitrile and water.

11. Use of at least one compound of formula: 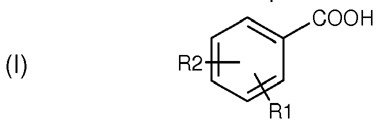 in which R1 and R2 represent two groups different from each other, chosen from F, Cl, Br and CF₃, as tracing compound in an aqueous solution injected into an underground formation containing hydrocarbons, to study said underground formation by diffusion of the tracing compound throughout the latter, and in particular to monitor the flows between an injection well and a production well and/or to assess the volumes of hydrocarbon reserves in the underground formation.

12. Use according to claim 11, in which the compound of formula (I) is chosen from 2-chloro-4-fluorobenzoic acid, 2-chloro-6-fluorobenzoic acid, 3-chloro-2-fluorobenzoic acid, 3-chloro-4-fluorobenzoic acid, 4-chloro-2-fluorobenzoic acid, 5-chloro-2-fluorobenzoic acid, 2-fluoro-3-(trifluoromethyl)benzoic acid, 2-fluoro-4-(trifluoromethyl)benzoic acid, 2-fluoro-5-(trifluoromethyl) benzoic acid, 2-fluoro-6-(trifluoromethyl)benzoic acid, 3-fluoro-4-(trifluoromethyl)benzoic acid, 3-fluoro-5-(trifluoromethyl)benzoic acid, 4-fluoro-2-(trifluoromethyl)benzoic acid, 4-fluoro-3-(trifluoromethyl)benzoic acid and 5-fluoro-2-(trifluoromethyl)benzoic acid.
